(19) Europäisches Patentamt
European Patent Office
Office européen des brevets

(11) **EP 4 125 264 B1**

(12) **EUROPÄISCHE PATENTSCHRIFT**

(45) Veröffentlichungstag und Bekanntmachung des Hinweises auf die Patenterteilung:
**22.04.2026 Patentblatt 2026/17**

(21) Anmeldenummer: **22184046.5**

(22) Anmeldetag: **11.07.2022**

(51) Internationale Patentklassifikation (IPC):
***H04N 1/60*** (2006.01)

(52) Gemeinsame Patentklassifikation (CPC):
**H04N 1/6052**

(54) **VERFAHREN ZUR TRANSFORMATION VON FARBRÄUMEN**

METHOD FOR TRANSFORMING COLOUR SPACES

PROCÉDÉ DE TRANSFORMATION DES ESPACES CHROMATIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2021 DE 102021208206**

(43) Veröffentlichungstag der Anmeldung:
**01.02.2023 Patentblatt 2023/05**

(73) Patentinhaber: **Heidelberger Druckmaschinen AG 69115 Heidelberg (DE)**

(72) Erfinder:
• **Laubmann, Tobias**
  **69234 Dielheim (DE)**
• **Thomsen, Dr. Hauke**
  **24226 Heikendorf (DE)**
• **Bollmann, Dr. Stefan**
  **22523 Hamburg (DE)**
• **Schenk, Stefan**
  **69257 Wiesenbach (DE)**

(56) Entgegenhaltungen:
**EP-A1- 2 421 242      US-A1- 2007 058 181**

• **"Color Management: Understanding and Using ICC Profiles", 22 March 2010, WILEY, ISBN: 978-0-470-05825-1, article PHIL GREEN ET AL: "Color Management: Understanding and Using ICC Profiles", pages: ToC,Ch01-Ch08,Ch14 - Ch18, XP055652861**

**Beschreibung**

Die Erfindung betrifft Verfahren zur Transformation von Farbwerten eines ersten geräteabhängigen Farbraums in die Farbwerte eines zweiten geräteabhängigen Farbraums. Das Verfahren findet beispielsweise in der Druckindustrie Anwendung, um visuelle Farbeindrücke aneinander anzugleichen.

In der Druckindustrie werden Druckvorlagen für Druckseiten erzeugt, die alle zu druckenden Elemente wie Texte, Grafiken und Bilder enthalten. Im Fall der elektronischen Herstellung der Druckvorlagen liegen diese Elemente in Form von digitalen Daten vor. Für ein Bild werden diese Daten beispielsweise erzeugt, indem das Bild von einem Scanner punkt- und zeilenweise abgetastet wird, jeder Bildpunkt in Farbkomponenten zerlegt wird und die Farbkomponenten digitalisiert werden. Üblicherweise werden Bilder in einem Scanner in die Farbkomponenten Rot, Grün und Blau (R, G, B) zerlegt, also in die Komponenten eines dreidimensionalen Farbraums (RGB-Farbraum). Für den farbigen Druck, etwa in Druckmaschinen, werden jedoch andere Farbkomponenten benötigt. Beim Vierfarbdruck sind dies die Druckfarben Cyan, Magenta, Gelb und Schwarz (C, M, Y, K), also die Komponenten eines vierdimensionalen Farbraums (CMYK-Farbraum).

Beim Druckprozess müssen die Bilddaten vom RGB-Farbraum des Scanners in den CMYK-Farbraum des verwendeten Druckprozesses transformiert werden. Sollen die für einen Druckprozess erzeugten CMYK-Bilddaten auf einem Bildschirm (beispielsweise LCD) als sogenannter Softproof dargestellt werden oder sollen die Bilddaten vorab beispielsweise auf einem Inkjetdrucker als Proof ausgegeben werden, so sind jeweils weitere Farbtransformationen erforderlich, damit der visuelle Eindruck der Farben so genau wie möglich dem späteren Druckprozess, der für den Auflagendruck verwendet wird, entspricht.

Solche Farbtransformationen werden in der Druckindustrie benötigt, weil alle Geräte und Prozesse bestimmte Einschränkungen und Besonderheiten bei der Darstellung und Wiedergabe von Farben haben. Deshalb gibt es für verschiedene Geräte und Prozesse wie Scanner, Monitore, Proofausgabegeräte, Druckprozesse und dergleichen unterschiedliche Farbräume, welche die Farbeigenschaften des Geräts beziehungsweise Prozesses jeweils bestmöglich beschreiben und die als geräteabhängige Farbräume (englisch: device dependent color spaces) bezeichnet werden.

Neben den geräteabhängigen Farbräumen gibt es noch geräteunabhängige Farbräume (englisch: device independent color spaces), welche auf den menschlichen Seheigenschaften eines sogenannten Normalbeobachters basieren. Solche Farbräume sind beispielsweise der von der Standardisierungsorganisation CIE (Commission Internationale d'Éclairage) definierte XYZ-Farbraum oder der daraus abgeleitete L*a*b*-Farbraum. Die L*a*b*-Farbkomponenten lassen sich in XYZ-Farbkomponenten umrechnen und umgekehrt. Will man wissen, ob zwei Farben bei gleichen Umfeldbedingungen, insbesondere bei der gleichen Beleuchtung, vom menschlichen Auge als gleich oder verschieden empfunden werden, so genügt dazu die Messung der XYZ- beziehungsweise L*a*b*-Farbkomponenten. Die L*a*b*-Farbkomponenten bilden einen Farbraum mit einer Helligkeitsache [L*] und zwei Farbachsen [a*, b*], die man sich in der Ebene eines Farbkreises vorstellen kann, durch dessen Mittelpunkt die Helligkeitsachse verläuft.

Die US 7,161,710 B1 beschreibt die Transformation von Farbräumen mittels Verkettung von Rendering Intents, etwa für Druckanwendungen.

Die DE 103 22 378 A1 beschreibt ein Verfahren zur Farbtransformation zwischen Farbräumen mittels Farbprofilen, wobei Rendering Intents genutzt werden.

Die US 2007/058181 A1 beschreibt ein Verfahren zur Konvertierung von Farbwerten zwischen verschiedenen Geräten, in dem über Umrechnungsvorschriften sowohl relative Farbanpassungen als auch absolute Farbanpassungen vorgenommen werden können.

Ein Gerät beziehungsweise farbverarbeitender Prozess kann bezüglich seiner Farbeigenschaften charakterisiert werden, indem allen möglichen Wertekombinationen des zugehörigen geräteabhängigen Farbraums die XYZ-Farbkomponenten zugeordnet werden, die ein Mensch bei der mit diesen Wertekombinationen erzeugten Farben sieht. Für einen Druckprozess erzeugen die verschiedenen CMYK-Wertekombinationen jeweils eine andere gedruckte Farbe. Mit einem Farbmessgerät kann man die XYZ-Komponenten der gedruckten Farben ermitteln und den CMYK-Wertekombinationen zuordnen. Eine solche Zuordnung, welche die mit einem Gerät beziehungsweise Prozess erzeugten geräteabhängigen Farben zu einem geräteunabhängigen Farbraum (XYZ oder L*a*b*) in Beziehung setzt, wird als Farbprofil bezeichnet, im Fall eines Druckprozesses als Ausgabe-Farbprofil. Die Definitionen und Datenformate für Farbprofile sind vom ICC standardisiert worden (ICC: International Color Consortium). In einem ICC-Farbprofil ist die Zuordnung der Farbräume in beiden Richtungen gespeichert, beispielsweise die Zuordnung XYZ = f1 (CMYK) und die invertierte Zuordnung CMYK = f2 (XYZ). Die mit einem Farbprofil festgelegte Zuordnung kann mit Hilfe eines Tabellenspeichers (englisch: look-up table) realisiert werden. Wenn zum Beispiel den CMYK-Farbkomponenten eines Druckprozesses die XYZ-Farbkomponenten zugeordnet werden sollen, muss der Tabellenspeicher für jede mögliche Wertekombination der CMYK-Farbkomponenten einen Speicherplatz haben, in dem die zugeordneten XYZ-Farbkomponenten gespeichert sind. Dieses einfache Zuordnungsverfahren hat jedoch den Nachteil, dass der Tabellenspeicher sehr groß werden kann, so dass in der Regel Interpolationsverfahren genutzt werden.

Die in den Farbprofilen gegebenen Zuordnungen zwischen geräteabhängigen Farbräumen und einem geräteunabhängigen Farbraum können zur Farbtransformation zwischen den geräteabhängigen Farbräumen verwendet werden, so dass zum Beispiel die Farbwerte [C1, M1, Y1, K1] eines ersten Druckprozesses dementsprechend in die Farbwerte [C2, M2, Y2, K2] eines zweiten Druckprozesses umgerechnet werden, dass der zweite Druck nach dem visuellen Eindruck die gleichen Farben hat wie der erste Druck.

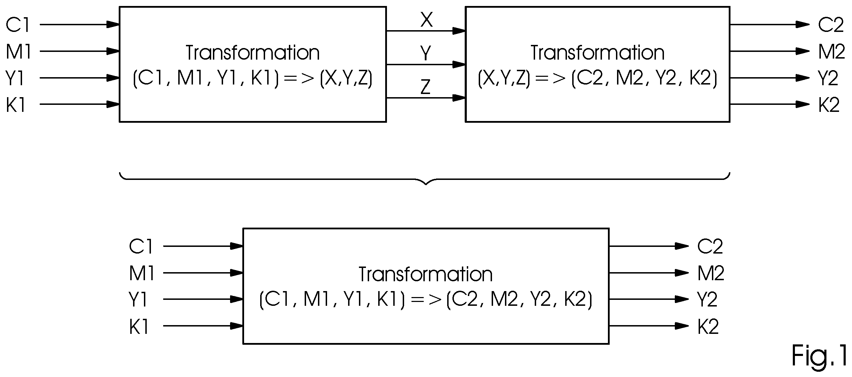

Figur 1 zeigt schematisch das Prinzip einer solchen Farbtransformation für eine Druckprozessanpassung nach dem Stand der Technik. Eine erste Farbtransformation 1 von den Farbwerten [C1, M1, Y1, K1] des ersten Druckprozesses in XYZ-Farbwerte und eine zweite Farbtransformation 2 von den XYZ-Farbwerten in die Farbwerte [C2, M2, Y2, K2] des zweiten Druckprozesses werden nacheinander ausgeführt. Die beiden Farbtransformationen 1 und 2 können auch zu einer äquivalenten Farbtransformation 3 kombiniert werden, die direkt die Farbwerte [C1, M1, Y1, K1] und die Farbwerte [C2, M2, Y2, K2] einander zuordnet. Da über den geräteunabhängigen XYZ-Zwischenfarbraum jeweils die Farbwerte [C1, M1, Y1, K1] und [C2, M2, Y2, K2] einander zugeordnet werden, welche die gleichen XYZ-Farbwerte ergeben, werden die zugeordneten Druckfarben in den beiden Druckprozessen innerhalb des Druckfarbumfangs weitgehend als visuell gleich empfunden.

In der ICC-Spezifikation wird der geräteunabhängige Farbraum, über den die geräteabhängigen Farbräume bei einer Farbtransformation miteinander verknüpft werden, als Profile Connection Space (PCS) bezeichnet. Der Profile Connection Space ist das Interface zwischen den Farbprofilen der Geräte und Prozesse. Er ist als ein idealer Aufsichtsvorlagenfarbraum in einer idealen Betrachtungsumgebung definiert. Basis sind die von der CIE definierten Standardfarbräume CIE 1931 XYZ und CIE 1976 L*a*b*. Der Weißpunkt des Profile Connection Space ist durch die in der grafischen Technik gebräuchliche Normbeleuchtung D50, das heißt Beleuchtung mit einer Lichtquelle von 5000 Kelvin, definiert. Dieser Weißpunkt WPD50 hat die XYZ-Farbwerte:

$$X_{WPD50} = 0,9642 \qquad Y_{WPD50} = 1,0000 \qquad Z_{WPD50} = 0,8249$$

Für die in den ICC-Profilen beschriebenen Zuordnungen zwischen einem geräteabhängigen Farbraum und dem Profile Connection Space gibt es Varianten, die je nach der Reproduktionsabsicht (Rendering Intent) verwendet werden. Diese Rendering Intents werden als "Relative Colorimetric" oder "Relative", "Absolute Colorimetric" oder "Absolute", "Perceptual" und "Saturation" bezeichnet. Sie unterscheiden sich unter anderem durch das in die Farbprofile eingebaute sogenannte Gamut Mapping. Mit Gamut Mapping wird das Verfahren beziehungsweise die Strategie bezeichnet, mit der die unterschiedlichen Farbumfänge der geräteabhängigen Farbräume aneinander angepasst werden. Beispielsweise sind nicht alle hellen und gesättigten Farben, die auf einem Monitor dargestellt werden können, auch druckbar, insbesondere dann nicht, wenn der Druck auf schlechterem und relativ grauem Papier erfolgt, wie zum Beispiel auf Zeitungspapier. Dann müssen durch die Zuordnung des Farbprofils die nicht druckbaren Monitorfarben in ähnliche Farben auf dem Rand des Farbumfangs der druckbaren Farben umgewandelt werden, so dass ein insgesamt harmonischer Farbeindruck ohne subjektiv empfundene Farbverfälschungen entsteht.

Mit dem Perceptual Rendering Intent wird angestrebt, neben der visuell empfundenen Farbgleichheit auch weitere für eine Bildwiedergabe wichtige Eigenschaften wie Kontrast, Detailzeichnung und reales Betrachtungsumfeld bei der Abbildung in den Profile Connection Space zu berücksichtigen. Der Saturation Rendering Intent bewahrt vorwiegend die reinen und gesättigten Farben und wird bei der Reproduktion von Grafiken angewendet.

Der relative Rendering Intent wird beispielsweise verwendet, um mit einer Farbtransformation unterschiedliche Druckprozesse aufeinander abzubilden, wobei der Farbumfang und der Helligkeitsumfang des Zielprozesses voll ausgenutzt wird. Insbesondere bedeutet das, dass der Weißpunkt des Quellenprozesses, das heißt, das Papierweiß, in den Weißpunkt des Zielprozesses abgebildet wird. Wenn der Weißpunkt des Zielprozesses heller ist als der Weißpunkt des Quellenprozesses, werden nach der Farbtransformation die Farben beim Drucken mit dem Zielprozess heller und brillanter wiedergegeben.

Mit dem absoluten Rendering Intent dagegen werden bei der Farbtransformation der Weißpunkt und die XYZ-Farbwerte des Quellenprozesses beim Drucken mit dem Zielprozess unverändert wiedergegeben. Die Voraussetzung dafür ist, dass der druckbare Farbumfang und der Helligkeitsbereich des Zielprozesses größer ist als der Umfang des Quellenprozesses. Der absolute Rendering Intent wird deshalb verwendet, um einen Quellendruckprozess als farblich exakten und verbindlichen Proof mit einem Zieldruckprozess, zum Beispiel auf einem hochwertigen Inkjetdrucker, wiederzugeben.

In den für den relativen Rendering Intent erstellten Zuordnungstabellen sind die den geräteabhängigen Farbwerten zugeordneten XYZ-Farbwerte des Profile Connection Space so skaliert, dass der mögliche Wertebereich des Profile Connection Space voll ausgenutzt wird. Das bedeutet insbesondere, dass dem gemessenen Weißpunkt WP1 des geräteabhängigen Farbraums (Media White Point) im Profile Connection Space der Weißpunkt WPD50 zugeordnet wird. Hat der Weißpunkt WP1 eines Quellendruckprozesses, beispielsweise des Zeitungsdrucks, die gemessenen XYZ-Farbwerte $[X_{WP1}, Y_{WP1}, Z_{WP1}]$, so werden bei der Erstellung des Farbprofils alle für verschiedene Wertekombinationen [C1, M1, Y1, K1] gemessenen Farbwerte [X1, Y1, Z1] der Farbfelder auf einer Testvorlage komponentenweise mit dem Verhältnis der Weißpunkte WPD50 und WP1 skaliert, um die zugeordneten Farbwerte $[X_{PCS1}, Y_{PCS1}, Z_{PCS1}]$ des Profile Connection Space zu erhalten.

$$X_{PCS1} = X1 \times X_{WPD50}/X_{WP1}$$

$$Y_{PCS1} = Y1 \times Y_{WPD50}/Y_{WP1} \qquad (1)$$

$$Z_{PCS1} = Z1 \times Z_{WPD50}/Z_{WP1}$$

Ebenso werden bei der Erstellung des Farbprofils für einen Zieldruckprozess mit dem Weißpunkt WP2, beispielsweise einen Offsetdruck, die für verschiedene Wertekombinationen [C2, M2, Y2, K2] gemessenen Farbwerte [X2, Y2, Z2] komponentenweise mit dem Verhältnis der Weißpunkte WPD50 und WP2 skaliert, um die zugeordneten Farbwerte [$X_{PCS2}$, $Y_{PCS2}$, $Z_{PCS2}$] des Profile Connection Space zu erhalten.

$$X_{PCS2} = X2 \times X_{WPD50}/X_{WP2}$$

$$Y_{PCS2} = Y2 \times Y_{WPD50}/Y_{WP2} \qquad (2)$$

$$Z_{PCS2} = Z2 \times Z_{WPD50}/Z_{WP2}$$

Da bei der Verknüpfung der Farbprofile nach Figur 1 jeweils gleiche Wertekombinationen [$X_{PCS1}$, $Y_{PCS1}$, $Z_{PCS1}$] und [$X_{PCS2}$, $Y_{PCS2}$, $Z_{PCS2}$] im Profile Connection Space einander zugeordnet werden, ergibt sich bei der Farbtransformation des Quellenprozesses in den Zielprozess nach dem relativen Rendering Intent der Zusammenhang:

$$X2 = X1 \times X_{WP2}/X_{WP1}$$

$$Y2 = Y1 \times Y_{WP2}/Y_{WP1} \qquad (3)$$

$$Z2 = Z1 \times Z_{WP2}/Z_{WP1}$$

Die geräteabhängigen Farbwerte [C1, M1, Y1, K1] des Quellenprozesses werden also so in die geräteabhängigen Farbwerte [C2, M2, Y2, K2] des Zielprozesses transformiert, dass die ihnen entsprechenden XYZ-Farbwerte im Verhältnis der Weißpunktwerte komponentenweise skaliert werden. Insbesondere ergibt sich aus der Beziehung (3), dass der Weißpunkt WP1 des Quellenprozesses in den Weißpunkt WP2 des Zielprozesses transformiert wird.

Eine solche einfache Skalierung der XYZ-Farbwerte, die sich nach der ICC-Spezifikation für den relativen Rendering Intent ergibt, ist nicht optimal, wenn die Weißpunkte des Quellenprozesses und des Zielprozesses relativ weit auseinander liegen. In dem Fall werden die relativen Abstände der Farben, die auf den Medien mit den unterschiedlichen Weißpunkten gedruckt sind, trotz der linearen Skalierung der XYZ-Farbwerte im Zielprozess nicht als äquivalent zum Quellenprozess empfunden, da das visuelle System des Menschen beim Betrachten der Farben des Zieldruckprozesses eine vom Weißpunkt abhängige chromatische Adaption durchführt.

Findet jedoch gar keine Transformation von Farbwerten zwischen unterschiedlichen Geräten statt, so werden bei der Ausgabe auf einem Ausgabegerät Farbwerte bei einem anderen Papierweiß im Ausgangsprozess, verglichen zum Papierweiß des Eingangsprozess, verändert. Dementsprechend ist dann etwa ein helles Rot, das einst auf einem hellen Bedruckstoff gedruckt wurde, bei Ausgabe desselben Druckbildes (etwa in Form einer PDF-Datei) auf einem dunkleren Bedruckstoff dunkler.

Die aus dem Stand der Technik bekannten Verfahren zur Umrechnung von Farbwerten sind mit Nachteilen verbunden. So ist es insbesondere wünschenswert, die Umrechnung von Farbwerten durchzuführen, ohne eine Simulation der Farbe des Bedruckstoffes (Papierweiß) vornehmen zu müssen.

Es ist Aufgabe der vorliegenden Erfindung, ein Verfahren anzugeben, mit dem eine effektive Umrechnung von Farbwerten zwischen zwei verschiedenen geräteabhängigen Farbräumen möglich ist und mit dem man einen gleichen visuellen Eindruck in beiden Farbräumen erhält.

Dementsprechend betrifft die vorliegende Erfindung ein Verfahren zur Transformation von Farbwerten gemäß Anspruch 1.

Erfindungsgemäß kombiniert man wenigstens einen absoluten Rendering Intent mit wenigstens einem relativen Rendering Intent. In einer bevorzugten Ausführungsform bedeutet "kombiniert" dabei, dass zwischen den Abbildungen der beiden Rendering Intents absoluter Rendering Intent und relativer Rendering Intent überblendet wird. Mit anderen Worten, in einigen Bereichen des Farbraums verwendet man die absolut colorimetrische Abbildung (den absoluten Rendering Intent), in anderen Bereichen des Farbraums, insbesondere bei der Farbe des Substratuntergrunds, bevorzugt Papierweiß, verwendet man die relativ colorimetrische Abbildung (den relativen Rendering Intent) und dazwischen wird übergeblendet. Da die Transformationen [C1,M1,Y1,K1]=>[X,Y,Z] und [X,Y,Z]=>[C2,M2,Y2,K2] (siehe Figur 1) nicht linear sind und weiter das Überblenden in [X,Y,Z], beziehungsweise genauer der Farbraumkoordinaten nach linearisierter Bradford-Transformation, mit einem Exponenten funktioniert (siehe unten), gilt nur näherungsweise [C2,M2,Y2,K2] = a* [C2,M2,Y2,K2]$_{absolut}$ + (1-a)*[C2,M2,Y2,K2]$_{relativ}$, wobei der Überblendparameter a von der Position im Farbraum abhängt.

In einer besonders bevorzugten Ausführungsform bedeutet die erfindungsgemäße Kombination von absolutem Rendering Intent und relativem Rendering Intent, dass man bei der Transformation der Farbwerte des ersten geräteabhängigen Farbraums in die Farbwerte des zweiten geräteabhängigen Farbraums einen Teil der Farbwerte des ersten geräteabhängigen Farbraums mittels wenigstens eines absoluten Rendering Intents und einen Teil der Farbwerte des ersten geräteabhängigen Farbraums mittels wenigstens eines relativen Rendering Intents transformiert.

In einer bevorzugten Ausführungsform handelt es sich bei dem wenigstens einen absoluten Rendering Intent und dem wenigstens einen relativen Rendering Intent j eweils um colorimetrische Rendering Intents.

In einer weiteren bevorzugten Ausführungsform kombiniert man bei der Transformation der Farbwerte des ersten geräteabhängigen Farbraums in die Farbwerte des zweiten geräteabhängigen Farbraums genau einen absoluten Rendering Intent mit genau einem relativen Rendering Intent.

Erfindungsgemäß führt man die Transformation der Farbwerte des ersten geräteabhängigen Farbraums in die Farbwerte des zweiten geräteabhängigen Farbraums über die Farbwerte eines Zwischenfarbraums durch. In einer bevorzugten Ausführungsform ist der Zwischenfarbraum ein geräteunabhängiger Farbraum (Profile Connection Space). In einer ganz besonders bevorzugten Ausführungsform entsprechen die Farbwerte des Zwischenfarbraums dem D50 2° Normalbeobachter.

Erfindungsgemäß transformiert man die Farbwerte des ersten geräteabhängigen Farbraums in die Farbwerte des Zwischenfarbraums und die Farbwerte des Zwischenfarbraums in die Farbwerte des zweiten geräteabhängigen Farbraums. Erfindungsgemäß kombiniert man bei der Transformation der Farbwerte des ersten geräteabhängigen Farbraums in die Farbwerte des Zwischenfarbraums wenigstens einen absoluten Rendering Intent mit wenigstens einem relativen Rendering Intent. Erfindungsgemäß kombiniert man bei der Transformation der Farbwerte des Zwischenfarbraums in die Farbwerte des zweiten geräteabhängigen Farbraums wenigstens einen absoluten Rendering Intent mit wenigstens einem relativen Rendering Intent. Erfindungsgemäß kombiniert man sowohl bei der Transformation der Farbwerte in den Zwischenfarbraum, als auch bei der Transformation der Farbwerte aus dem Zwischenfarbraum in die Farbwerte des zweiten geräteabhängigen Farbraums wenigstens einen absoluten Rendering Intent mit wenigstens einem relativen Rendering Intent.

In Standard-ICC-Profilen gibt es drei Umrechnungstabellen für vier Rendering Intents, nämlich i) eine für Perceptual, ii) eine für Saturation und iii) eine für sowohl Absolute und Relative. In einer bevorzugten Ausführungsform werden Rendering Intents nicht aus zwei verschiedenen Umrechnungstabellen miteinander kombiniert, sondern nur innerhalb derselben Umrechnungstabelle. Dementsprechend ist beispielsweise die Kombination Perceptual mit Absolute nicht bevorzugt.

Dementsprechend transformiert man in einer bevorzugten Ausführungsform die Farbwerte des ersten geräteabhängigen Farbraums über wenigstens ein Profil, das wenigstens eine Umrechnungstabelle umfasst, in die Farbwerte des Zwischenfarbraums und transformiert die Farbwerte des Zwischenfarbraums über wenigstens ein Profil, das wenigstens eine Umrechnungstabelle umfasst, in die Farbwerte des zweiten geräteabhängigen Farbraums, wobei der wenigstens eine absolute Rendering Intent und der wenigstens eine relative Rendering Intent die gleiche Umrechnungstabelle verwenden. In einer besonders bevorzugten Ausführungsform handelt es sich bei dem wenigstens einen Profil um wenigstens ein ICC-Profil. Dann handelt es sich bei dem Zwischenfarbraum bevorzugt um den Profile Connection Space (PCS).

In einer besonders bevorzugten Ausführungsform transformiert man die Farbwerte des ersten geräteabhängigen Farbraums über wenigstens ein Profil, das wenigstens eine Umrechnungstabelle umfasst, in die Farbwerte des Zwischenfarbraums, wobei absoluter Rendering Intent und relativer Rendering Intent die gleiche Umrechnungstabelle verwenden. In einer weiteren besonders bevorzugten Ausführungsform transformiert man die Farbwerte des Zwischenfarbraums in die Farbwerte des zweiten geräteabhängigen Farbraums über wenigstens ein Profil, das wenigstens eine Umrechnungstabelle umfasst, wobei absoluter Rendering Intent und relativer Rendering Intent die gleiche Umrechnungstabelle verwenden. Es ist auch möglich, dass man die erfindungsgemäße Kombination von absolutem Rendering Intent und relativem Rendering Intent über wenigstens ein Profil mit wenigstens einer Umrechungstabelle gleichzeitig sowohl bei der Transformation in die Farbwerte des Zwischenfarbraums hinein als auch bei der Transformation aus den Farbwerten des Zwischenfarbraums hinaus verwendet.

In einer weiteren bevorzugten Ausführungsform ist das Gerät, auf das sich der erste geräteabhängige Farbraum bezieht, ein anderes Gerät als das Gerät, auf das sich der zweite geräteabhängige Farbraum bezieht.

In einer weiteren bevorzugten Ausführungsform führt man die Transformation der Farbwerte des ersten geräteabhängigen Farbraums in die Farbwerte des zweiten geräteabhängigen Farbraums während eines Druckverfahrens durch, in dem man ein digitales Druckbild mittels einer Druckmaschine auf einen Bedruckstoff druckt und wobei der erste geräteabhängige Farbraum der Farbraum eines Bildschirms und der zweite geräteabhängige Farbraum der Farbraum der Druckmaschine ist. In einer besonders bevorzugten Ausführungsform ist das Druckverfahren ausgewählt unter Hochdruckverfahren, Flachdruckverfahren, Tiefdruckverfahren und Kombinationen davon, insbesondere Offsetdruck, Inkjetdruck, Flexodruck, Siebdruck und Tiefdruck.

In einer weiteren bevorzugten Ausführungsform nimmt man bei der Transformation der Farbwerte des ersten geräteabhängigen Farbraums in die Farbwerte des zweiten geräteabhängigen Farbraums keine Simulation von Farbwerten des unbedruckten Bedruckstoffs vor.

In einer weiteren bevorzugten Ausführungsform bildet man den Farbwert des unbedruckten Bedruckstoffs im ersten geräteabhängigen Farbraum auf den Farbwert des unbedruckten Bedruckstoffs im zweiten geräteabhängigen Farbraum ab.

In einer weiteren bevorzugten Ausführungsform handelt es sich bei den Farbwerten des unbedruckten Bedruckstoffs um Papierweiß.

In einer weiteren bevorzugten Ausführungsform transformiert durch die Transformation der Farbwerte des ersten geräteabhängigen Farbraums in die Farbwerte des zweiten geräteabhängigen Farbraums der hellste Punkt des ersten geräteabhängigen Farbraums auf den hellsten Punkt des zweiten geräteabhängigen Farbraums auf eine Ausgabe ohne Druckpunkte. Mit anderen Worten, die Transformation erfolgt derart, dass ein Farbwert, der dem Weißpunkt im Eingangsfarbraum entspricht, zum Beispiel unbedrucktes Papier bei einem Druckerfarbraum als Eingangsfarbraum, auch wieder auf dem Weißpunkt in Ausgabefarbraum abgebildet wird. Das heißt also, dass für einen solchen Farbwert in der Ausgabe keine Farbe auf das Substrat gedruckt wird. Mit anderen Worten, unbedruckte Bereiche im Eingang bleiben unbedruckte Bereiche in der Ausgabe, und es erfolgt kein Druck von Druckpunkten, um das dunklere Papierweiß des Eingangs zu simulieren.

In einer weiteren bevorzugten Ausführungsform umfasst der wenigstens eine relative Rendering Intent eine Schwarzpunktkompensation. Das bedeutet, dass der dunkelste Punkt des Eingangsprozesses auch auf den dunkelsten Punkt des Ausgabeprozesses abgebildet wird. Durch eine solche Kompensation wird erreicht, dass auch die Tiefenzeichnung erhalten bleibt. Ohne eine solche Kompensation werden alle Farben, die im Ausgabefarbraum nach Berücksichtigung der relativen/absoluten/kombinierten Farbtransformation dunkler sind als die jeweils dunkelste Farbe, im Ausgabeprozess abgeschnitten und auf die untere Begrenzung des darstellbaren Farbkörpers geclipt werden. Dadurch sind dann Abrisse in Verläufen möglich.

Gegenstand der vorliegenden Erfindung ist auch eine Druckmaschine, mit der man das erfindungsgemäße Verfahren durchführt. Bevorzugte Druckmaschinen, auf denen man das erfindungsgemäße Verfahren ausführt, sind Offsetdruckmaschinen, Inkjetdruckmaschinen, Flexodruckmaschinen, Siebdruckmaschinen und Tiefdruckmaschinen.

Gegenstand der vorliegenden Erfindung ist auch die Verwendung des erfindungsgemäßen Verfahrens in einer Druckmaschine. Bevorzugte Druckmaschinen, in denen man das erfindungsgemäße Verfahren verwendet, sind Offsetdruckmaschinen, Inkjetdruckmaschinen, Flexodruckmaschinen, Siebdruckmaschinen und Tiefdruckmaschinen.

Die im Stand der Technik verwendeten Rendering Intents zielen bisher auf eine genehme (photographischer und photographischer, sättigungserhaltender=saturation und relativ colorimetrischer Rendering Intent) oder eine absolute Reproduktion (absoluter Rendering Intent) des gerätespezifischen Eingangsfarbkörper in dem gerätespezifischen Ausgangsfarbkörper ab. Die Rendering Intents "relativ colorimetrisch" und "relativ colorimetrisch mit Tiefenkompensation" werden hier als einfache Implementationen einer genehmen Abbildung betrachtet.

Der absolute Rendering Intent simuliert definitionsgemäß bei der Simulation von Prozessen mit dunklen Weißpunkten auf Prozessen mit hellerem Weißpunkt den dunklen Weißpunkt. Dies ist in der Verpackungsindustrie oft nicht gewünscht. Dagegen sind die Ausprägungen der anderen Rendering Intents so gestaltet, dass der gesamte Farbkörper des Eingangsprozesses in den Ausgangsfarbkörper verformt wird. Während dies bei beiden Ausprägungen des relativen Rendering Intents mit simpler Multiplikation des Weißpunktes und dunkelsten Punktes in XYZ geschieht, wird beim perzeptiven beziehungsweise sättigungserhaltendem=saturation Rendering Intent die Strategie des jeweiligen ICC-Profil algorithmus benutzt.

Es sind keine Ausführungen bekannt, die eine Kombination von absolutem und relativem Rendering Intent zum hellsten Punkt des Farbkörpers des Zielprozesses implementieren.

Im Stand der Technik bekannt ist ein Verfahren, in dem Papierweiß eine leere Separation im Farbkörper des Zielprozesses aufweist. Die simple Ersetzung der Abbildung des hellsten Punktes des Farbkörpers des Eingangsprozesses im Farbkörper des Ausgangsprozesses durch leere Separationen zeigt sich jedoch als unschön empfundene Übergänge in Bildern. Insbesondere Übergänge nahe des hellsten Punktes des Eingangsfarbkörpers, zum Beispiel bei Hochzeitskleidern oder weißen Blusen, sind im Farbkörper des Zielprozesses unstetig am Übergang zwischen Weiß und einer Separation, die gerade nicht mehr mit leeren Separationen gefüllt wird. Bisher ist keine Methodik bekannt, die durch Nutzung von Standard-ICC-Profilen genutzt werden kann.

In einer bevorzugten Ausführungsform der Erfindung sollen Vorlagedaten für ein Substrat mit einem Weißpunkt $W_1$ auf einem Substrat mit einem deutlich anderen Weißpunkt $W_2$ ausgegeben werden. Für beide Prozesse sind ICC-Profile vorhanden, welche die Prozesse beschreiben. Bekannt sind die zwei colorimetrischen Rendering Intents "absoluter Rendering Intent" und "relativer Rendering Intent".

Absoluter Rendering Intent: Exakte Reproduktion der gemessen Farbwerte (XYZ, L*a*b*) überall dort, wo es der Zielprozess erlaubt.

$$\begin{pmatrix} x_2 \\ y_2 \\ z_2 \end{pmatrix} = \begin{pmatrix} x_1 \\ y_1 \\ z_1 \end{pmatrix} \qquad (4)$$

Es erfolgt die Simulation des Papierweiß' des Ausgangsprozesses, das heißt, unter Umständen (Zielpapier heller als Ausgangspapier oder andere Farbigkeit) werden auch weiße Flächen bedruckt. Helle Farben werden abgeschnitten, wenn das Zielpapier zu dunkel ist.

Relativer Rendering Intent: Reproduktion der gemessen Farbwerte (XYZ, L*a*b*) im Verhältnis zum Weißpunkt des jeweiligen Prozesses.

Farbkoordinaten *(x, y, z)* werden mit dem Verhältnis der Koordinaten der Weißpunkte skaliert:

$$\begin{pmatrix} x_2 \\ y_2 \\ z_2 \end{pmatrix} = \begin{pmatrix} x_1 \cdot \dfrac{x_{\text{white,2}}}{x_{\text{white,1}}} \\ y_1 \cdot \dfrac{y_{\text{white,2}}}{y_{\text{white,1}}} \\ z_1 \cdot \dfrac{z_{\text{white,2}}}{z_{\text{white,1}}} \end{pmatrix} \qquad (5)$$

Die Farbkoordinaten *(x, y,* z) können beispielsweise XYZ oder ein an die Empfindlichkeit des menschlichen Auges angepasstes Koordinatensystem $K$ sein. In dem Fall müssen die Farbkoordinaten von Eingangswert und Papierweiß zunächst in das Koordinatensystem $K$ transformiert und die skalierten Koordinaten wieder zurücktransformiert werden. Das Papierweiß bleibt auch im Zielprozess in jedem Fall unbedruckt. Bei dunklem Zielpapier werden auch farbige Töne entsprechend verdunkelt.

Gewünscht ist jedoch oftmals ein Verhalten, bei dem die Farbtöne mit deutlicher Bedruckung der Fläche (zum Beispiel ein Vollton Cyan oder ein Rot aus 100 % Magenta und 100 % Yellow) wie beim absoluten Rendering Intent exakt wiedergegeben werden. Zum Papierweiß hin soll das Verhalten dem relativen Rendering Intent entsprechen, so dass das Papier unbedruckt bleibt und Zeichnung auch in den Lichtern erhalten bleibt.

Ohne ICC-basiertes Color Management kann so ein Verhalten an einer Offset-Druckmaschine erreicht werden, indem die Platten des Ausgangspapieres verwendet werden, das Papier mit dem anderen Weißpunkt $W_2$ eingelegt wird und beim Einstellen der Maschine versucht wird, möglichst gut Volltöne und Tonwertzunahmen des Standards für das ursprüngliche Papier anzufahren. Dieses Verfahren ist nur so lange möglich, solange die Platten übernommen werden können. Es kann nicht funktionieren, wenn der Zielprozess mehr oder weniger Prozessfarben verwendet als der Ausgangsprozess, Spotfarben im Ausgangsprozess durch Prozessfarben im Zielprozess simuliert werden, sich die beiden Prozessen außer im Papierweiß auch durch prozesstechnische Eigenschaften (Ort der Volltöne, Zusammendruckverhalten und dergleichen) unterscheiden oder der Zielprozess eine andere Drucktechnologie ist.

In dem erfindungsgemäßen Ansatz wird ein Verfahren für die Transformation

$$(x_2, y_2, z_2) = F((x_1, y_1, z_1)) \qquad (6)$$

der Farbkoordinaten als Kombination aus (4) und (5) verwendet, welches das gewünschte Verhalten zeigt. Die Farbkoordinaten *x, y* und *z* können hier wieder zum Beispiel XYZ oder ein der Empfindung des menschlichen Auges angepasstes Koordinatensystem sein.

Zwei Grenzfälle der Transformation sind möglich:

i) relatives Verhalten beim Papierweiß:

$$F\left(\left(x_{\text{white},1}, y_{\text{white},1}, z_{\text{white},1}\right)\right) = \left(x_{\text{white},2}, y_{\text{white},2}, z_{\text{white},2}\right) = \begin{pmatrix} x_{\text{white},1} \cdot \left(\dfrac{x_{\text{white},2}}{x_{\text{white},1}}\right)^{1} \\ y_{\text{white},1} \cdot \left(\dfrac{y_{\text{white},2}}{y_{\text{white},1}}\right)^{1} \\ z_{\text{white},1} \cdot \left(\dfrac{z_{\text{white},2}}{z_{\text{white},1}}\right)^{1} \end{pmatrix} \qquad (7)$$

ii) absolutes Verhalten, wenn mindestens eine der Farbkoordinaten klein ist:

$$\lim_{x_1 \mapsto 0} F\left(\left(x_1, y_1, z_1\right)\right) = \left(x_1, y_1, z_1\right) = \begin{pmatrix} x_1 \cdot \left(\dfrac{x_{\text{white},2}}{x_{\text{white},1}}\right)^{0} \\ y_1 \cdot \left(\dfrac{y_{\text{white},2}}{y_{\text{white},1}}\right)^{0} \\ z_1 \cdot \left(\dfrac{z_{\text{white},2}}{z_{\text{white},1}}\right)^{0} \end{pmatrix} \qquad (8)$$

$$\lim_{y_1 \mapsto 0} \text{ und } \lim_{z_1 \mapsto 0}: \text{analog} \qquad (9)$$

Durch die Kombination der Gleichungen (7) und (8) bietet sich eine Formulierung der Transformation wie folgt an:

$$F\left(\left(x_1, y_1, z_1\right)\right) = \begin{pmatrix} x_1 \cdot \left(\dfrac{x_{\text{white},2}}{x_{\text{white},1}}\right)^{\alpha_x} \\ y_1 \cdot \left(\dfrac{y_{\text{white},2}}{y_{\text{white},1}}\right)^{\alpha_y} \\ z_1 \cdot \left(\dfrac{z_{\text{white},2}}{z_{\text{white},1}}\right)^{\alpha_z} \end{pmatrix} \qquad (10)$$

Die Exponenten $\alpha$ hängen dabei von Farbort ab, und es muss gelten $\alpha = 1$ für Papierweiß und $\alpha \mapsto 0$, wenn eine Farbkoordinate gegen Null geht. Dabei können die Exponenten $\alpha_x$, $\alpha_y$, $\alpha_z$ theoretisch unterschiedlich sein. Im Folgenden soll der erste Ansatz auf den Fall beschränkt werden, dass die Exponenten für alle Komponenten gleich sind, $\alpha_x = \alpha_y = \alpha_z = \alpha$. Somit wird die Transformationsgleichung (10) zu

$$F\left(\left(x_1, y_1, z_1\right)\right) = \begin{pmatrix} x_1 \cdot \left(\dfrac{x_{\text{white},2}}{x_{\text{white},1}}\right)^{\alpha} \\ y_1 \cdot \left(\dfrac{y_{\text{white},2}}{y_{\text{white},1}}\right)^{\alpha} \\ z_1 \cdot \left(\dfrac{z_{\text{white},2}}{z_{\text{white},1}}\right)^{\alpha} \end{pmatrix} \qquad (11)$$

wobei die Herausforderung nun darin besteht, den Exponenten $\alpha$ als Funktion der Farbkoordinaten $x_1$, $y_1$, $z_1$ und $x_{\text{white},1}$, $y_{\text{white},1}$, $z_{\text{white},1}$ zu bestimmen. Dabei sollen neben den Randbedingungen, die sich aus (7) und (8) ergeben, noch weitere Bedingungen erfüllt werden:

1.

$$\alpha = 1 \text{ für } xyz_1 = xyz_{\text{white},1}$$

2.

$$\lim_{x \mapsto 0} \alpha = 0 \text{ und } \lim_{y \mapsto 0} \alpha = 0 \text{ und } \lim_{z \mapsto 0} \alpha = 0$$

3. $\alpha$ soll sich für alle Werte von *xyz* zwischen 0 und *xyz*<sub>white</sub> zwischen 0 und 1 befinden

3. $\alpha$ soll sich für alle Werte von *xyz* zwischen 0 und *xyz_white* zwischen 0 und 1 befinden

4. $\alpha$ soll für jede Komponente von *xyz* streng monoton steigend sein

5. $\alpha$ soll stetig sein

6. Damit sich die Transformationen $W_1 \mapsto W_2$ und $W_2 \mapsto W_1$ exakt invers zueinander verhalten, muss es unerheblich sein, ob $\alpha$ für die ursprünglichen Koordinaten oder für die transformierten Koordinaten bestimmt wird. Das heißt,

$$\alpha(xyz_1, xyz_{\text{white},1}) = \alpha(xyz_2, xyz_{\text{white},2}).$$

Hier wurde die Abkürzung *xyz* = (*x, y, z*) für den gesamten Koordinatenvektor eingeführt.

Um die oben genannte Bedingung 6 der Unabhängigkeit von der Transformationsrichtung garantieren zu können, führt man zunächst einen weißpunktunabhängigen Zwischenfarbraum mit den Koordinaten $xyz_{\text{m}} = (x_{\text{m}}, y_{\text{m}}, z_{\text{m}})$ ein. Wenn für jeden Ausgangsweißpunkt $W_1$, zumindest formal, immer in diesen Zwischenfarbraum abgebildet und von dort aus in die Koordinaten für den Zielweißpunkt $W_2$ abgebildet wird, ist die Unabhängigkeit von der Richtung auf jeden Fall dann sichergestellt, wenn der Exponent $\alpha$ in diesem Zwischenraum bestimmt wird.

Im Folgenden betrachtet man der Einfachheit halber zunächst nur eine Komponente *x* des Farbraums und beschreibt die Abbildung in den Zwischenraum nach $x = x_1$ *oder* $x_2$ zunächst als

$$x = f(x_{\text{m}}, x_{\text{white}}) := f(x_{\text{m}}) \tag{12}$$

ohne die Schreibweise mit dem Exponenten $\alpha$. Für die Funktion *f* müssen nun folgende Bedingungen gelten:

1.

$$f(0) = 0$$

2.

$$\frac{\mathrm{d}f}{\mathrm{d}x_{\text{m}}}\Big|_{x_{\text{m}}=0} = 1$$

3.

$$f(1) = x_{\text{white}}$$

4.

$$\frac{\mathrm{d}f}{\mathrm{d}x_{\text{m}}} > 0 \, \forall \, 0 \leq x_{\text{m}} \leq 1$$

Und diese Bedingungen gewährleisten zu können, macht man folgenden Ansatz für eine Differentialgleichung für die Bestimmung von *f*:

$$\frac{\mathrm{d}f(x_{\text{m}})}{\mathrm{d}x_{\text{m}}} = \frac{x_{\text{white}} - f(x_{\text{m}})}{x_{\text{white}}} \cdot \frac{1}{(1 - x_{\text{m}})} \tag{13}$$

Diese Gleichung hat als allgemeine Lösung

$$f(x_{\text{m}}) = c_1 \cdot (x_{\text{m}} - 1)^{\frac{1}{x_{white}}} + x_{white} \tag{14}$$

und durch Einsetzen der Randbedingungen ergibt sich

$$x = f(x_{\mathrm{m}}) = x_{white} \cdot \left(1 - (1 - x_{\mathrm{m}})^{\frac{1}{x_{white}}}\right) \tag{15}$$

Die Gleichung (15) lässt sich nun auch für die Richtung von absoluten Farbkoordinaten auf dem Papierweiß $W_1$ beziehungsweise $W_2$ in den Zwischenfarbraum umstellen:

$$x_{\mathrm{m}} = 1 - \left(1 - \frac{x}{x_{white}}\right)^{x_{white}} \tag{16}$$

Setzt man nun Gleichung (16) für $x = x_1$ in Gleichung (15) für $x = x_2$ ein, so erhält man als Transformationsgleichung von $x_1$ mit $x_{white,1}$ nach $x_2$ mit $x_{white,2}$:

$$x_2 = x_{white,2} \cdot \left[1 - \left(1 - \frac{x_1}{x_{white,1}}\right)^{\frac{x_{white,1}}{x_{white,2}}}\right] \tag{17}$$

Damit man Gleichung (17) in der Form $x_2 = x_1 \cdot \left(\frac{x_{white,2}}{x_{white,1}}\right)^{\alpha}$ schreiben kann, ergibt sich

$$x_2 = x_1 \cdot \left(\frac{x_{white,2}}{x_{white,1}}\right)^{\alpha} \quad \text{mit} \quad \alpha = \frac{\log\left\{\frac{x_{white,2}}{x_1} \cdot \left[1 - \left(1 - \frac{x_1}{x_{white,1}}\right)^{\frac{x_{white,1}}{x_{white,2}}}\right]\right\}}{\log\left\{\frac{x_{white,2}}{x_{white,1}}\right\}} \tag{18}$$

Da der Zusammenhang zwischen $x_1$ und $x_2$ in Gleichung (17) durch die Konstruktion über den Zwischenfarbraum unabhängig von der Transformationsrichtung und Gleichung (18) nur eine andere Darstellung für diesen Zusammenhang ist, muss auch für Gleichung (18) die Unabhängigkeit von der Transformationsrichtung gelten.

Gleichung (18) kann nun auf die drei Farbraumkoordinaten $x$, $y$ und $z$ separat angewendet werden. Dadurch ergibt sich ein relativ colorimetrisches Verhalten zum Weiß hin sowie ein absolut colorimetrisches Verhalten zum Schwarz hin. Allerdings hat dieses Verfahren noch zwei Besonderheiten:

1. Die Exponenten $\alpha$ unterscheiden sich für $x$, $y$ und $z$, was potentiell zu störenden Farbverschiebungen führt.

2. Sobald eine der Koordinaten $x$, $y$ oder $z$ einen deutlich von 0 verschiedenen Wert hat, wird diese Koordinate schon nicht mehr ähnlich wie absolut colorimetrisch transformiert.

Daher führt man eine repräsentative Koordinate q mit folgenden Eigenschaften ein:

i) q transformiert sich wie $x$, $y$ und $z$, also

$$q_2 = q_1 \cdot \left(\frac{q_{white,2}}{q_{white,1}}\right)^{\alpha} \tag{19}$$

ii) $q$ geht gegen 0, sobald mindestens eine der Koordinaten $x$, $y$ oder $z$ gegen 0 geht.

Eine Koordinate, die diese Bedingungen erfüllt, ist das geometrische Mittel der Koordinaten $x$, $y$ und $z$

$$q = \sqrt[3]{x \cdot y \cdot z} \tag{20}$$

$$q_{white} = \sqrt[3]{x_{white} \cdot y_{white} \cdot z_{white}} \tag{21}$$

etc.

Damit lässt sich nun ein gemeinsamer Exponent $\alpha$ für alle Koordinaten bestimmen, und die finale Transformationsgleichung lautet zusammengefasst:

$$x_2 = x_1 \cdot \left(\frac{x_{\text{white},2}}{x_{\text{white},1}}\right)^{\alpha}, \qquad y_2 = y_1 \cdot \left(\frac{y_{\text{white},2}}{y_{\text{white},1}}\right)^{\alpha}, \qquad z_2 = z_1 \cdot \left(\frac{z_{\text{white},2}}{z_{\text{white},1}}\right)^{\alpha} \qquad (22)$$

mit

$$\alpha = \frac{\log\left\{\frac{q_{\text{white},2}}{q_1} \cdot \left[1 - \left(1 - \frac{q_1}{q_{\text{white},1}}\right)^{\frac{q_{\text{white},1}}{q_{\text{white},2}}}\right]\right\}}{\log\left\{\frac{q_{\text{white},2}}{q_{\text{white},1}}\right\}} \qquad \text{und} \quad q = \sqrt[3]{x \cdot y \cdot z} \qquad (23)$$

Dabei ist zu beachten, dass die Koordinaten *xyz* nicht notwendigerweise XYZ entsprechen. Gegebenenfalls muss zunächst eine lineare Transformation, wie zum Beispiel eine aus dem Stand der Technik prinzipiell bekannte Bradford-Matrix, auf die XYZ-Koordinaten angewendet werden und nach der Transformation die inverse Bradford-Matrix. Die Koordinaten der Weißpunkte sind in diesem Fall natürlich analog zu behandeln.

Außerdem ist zu beachten, dass die verwendeten Farbkoordinaten xyz immer absolut, also nicht mit den Koordinaten des Weißpunktes skaliert, zu verstehen sind. Da intern für Berechnungen mit ICC-Profilen zumeist Farbkoordinaten in Einheiten des Weißpunktes verwendet werden, ist diese Skalierung zu beachten. Da es eine einfache Multiplikation ist und die Weißpunkte zu jedem Zeitpunkt bekannt sind, stellt dies aber keine Einschränkung für die Anwendbarkeit dar.

Für die spätere Betrachtung von Grenzfällen ist es sinnvoll, die Gleichungen (22) und (23) in zentrierten, also mit den Koordinaten des Weißpunktes skalierten, Farbraumkoordinaten

$$\tilde{x} = \frac{x}{x_{\text{white}}} \qquad \tilde{y} = \frac{y}{y_{\text{white}}} \qquad \tilde{z} = \frac{z}{z_{\text{white}}} \qquad \tilde{q} = \frac{q}{q_{\text{white}}} \qquad (24)$$

darzustellen. Durch Einsetzen von (24) in (22) ergibt sich

$$\tilde{x}_2 = \tilde{x}_1 \cdot \left(\frac{x_{\text{white},2}}{x_{\text{white},1}}\right)^{\alpha-1} \quad \text{und} \quad \tilde{y}, \tilde{z} \text{ analog.} \qquad (25)$$

Für den Exponenten $\alpha$ ergibt sich durch Einsetzen von (24) in (23)

$$\alpha = \frac{\log\left\{\frac{1}{\tilde{q}_1} \cdot \left(\frac{q_{\text{white},2}}{q_{\text{white},1}}\right) \cdot \left[1 - (1 - \tilde{q}_1)^{\frac{q_{\text{white},1}}{q_{\text{white},2}}}\right]\right\}}{\log\left\{\frac{q_{\text{white},2}}{q_{\text{white},1}}\right\}}$$

$$= 1 + \frac{\log\left\{\frac{1}{\tilde{q}_1} \cdot \left[1 - (1 - \tilde{q}_1)^{\frac{q_{\text{white},1}}{q_{\text{white},2}}}\right]\right\}}{\log\left\{\frac{q_{\text{white},2}}{q_{\text{white},1}}\right\}}. \qquad (26)$$

Definiert man nun ein $\tilde{\alpha}$ für die zentrierten Farbraumkoordinaten als

$$\tilde{\alpha} = \alpha - 1 = \frac{\log\left\{\frac{1}{\tilde{q}_1} \cdot \left[1 - (1 - \tilde{q}_1)^{\frac{q_{\text{white},1}}{q_{\text{white},2}}}\right]\right\}}{\log\left\{\frac{q_{\text{white},2}}{q_{\text{white},1}}\right\}} \qquad (27)$$

so wird aus Gleichung (25)

$$\tilde{x}_2 \quad = \tilde{x}_1 \cdot \left(\frac{x_{\text{white},2}}{x_{\text{white},1}}\right)^{\tilde{\alpha}} \quad \text{und} \quad \tilde{y}, \tilde{z} \text{ analog.} \tag{28}$$

Setzt man $\tilde{\alpha}$ aus Gleichung (27) in (28) ein, so lässt sich diese durch Einführung neuer Abkürzungen weiter vereinfachen zu

$$\tilde{x}_2 \quad = \tilde{x}_1 \cdot \exp\left(\underbrace{\frac{\log\left\{\frac{x_{\text{white},1}}{x_{\text{white},2}}\right\}}{\log\left\{\frac{q_{\text{white},1}}{q_{\text{white},2}}\right\}}}_{:=\beta_x} \cdot \log\left\{\underbrace{\frac{1}{\tilde{q}_1} \cdot \left[1 - (1 - \tilde{q}_1)^{\frac{q_{\text{white},1}}{q_{\text{white},2}}}\right]}_{:=\tilde{f}_q}\right\}\right) \tag{29}$$

$$= \tilde{x}_1 \cdot \tilde{f}_q^{\;\beta_x}.$$

Damit lässt sich die Transformation der zentrierten Koordinaten kompakt schreiben als

$$\tilde{x}_2 \quad = \tilde{x}_1 \cdot \tilde{f}_q^{\;\beta_x} \qquad \tilde{y}_2 \quad = \tilde{y}_1 \cdot \tilde{f}_q^{\;\beta_y} \qquad \tilde{z}_2 \quad = \tilde{z}_1 \cdot \tilde{f}_q^{\;\beta_z} \tag{30}$$

$$\text{mit } \beta_x \quad = \frac{\log\left\{\frac{x_{\text{white},1}}{x_{\text{white},2}}\right\}}{\log\left\{\frac{q_{\text{white},1}}{q_{\text{white},2}}\right\}} \qquad \beta_y \quad = \frac{\log\left\{\frac{y_{\text{white},1}}{y_{\text{white},2}}\right\}}{\log\left\{\frac{q_{\text{white},1}}{q_{\text{white},2}}\right\}} \qquad \beta_z \quad = \frac{\log\left\{\frac{z_{\text{white},1}}{z_{\text{white},2}}\right\}}{\log\left\{\frac{q_{\text{white},1}}{q_{\text{white},2}}\right\}} \tag{31}$$

$$\text{und } \tilde{f}_q \quad = \frac{1}{\tilde{q}_1} \cdot \left[1 - (1 - \tilde{q}_1)^{\frac{q_{\text{white},1}}{q_{\text{white},2}}}\right] \tag{32}$$

Die Faktoren β in Gleichung (31) können bereits beim Aussetzen der Transformation berechnet werden, da sie nur von den Farbraumkoordinaten der Weißpunkte abhängen.

Die durch die Gleichungen (30), (31), (32) beschriebene Transformation F hat zwar die Eigenschaft, dass sich die Transformation von Weißpunkt $W_1$ nach Weißpunkt $W_2$ und die von Weißpunkt $W_2$ nach Weißpunkt $W_1$ exakt invers zueinander verhalten, das heißt

$$F_{W_2 \mapsto W_1}(F_{W_1 \mapsto W_2}(xyz)) \quad = xyz. \tag{33}$$

Allerdings ist das Ergebnis der Transformation im Allgemeinen nicht unabhängig davon, ob man bei der Transformation von Weißpunkt $W_1$ nach Weißpunkt $W_3$ zunächst nach Weißpunkt $W_2$ transformiert oder ob man die direkte Transformation berechnet, das heißt, im Allgemeinen gilt

$$F_{W_2 \mapsto W_3}(F_{W_1 \mapsto W_2}(xyz)) \quad \neq F_{W_1 \mapsto W_3}(xyz) \tag{34}$$

Um diese Eigenschaft herzustellen, lässt sich die Transformation dahingehend modifizieren, dass nicht direkt zwischen den Ausgangs- und Zielweißpunkt transformiert wird, sondern immer der Weißpunkt der in der ICC-Spezifikation festgelegten Beleuchtungs- und Beobachtungsbedingung D50-Lichtart und 2°-Beobachter (D50O02) als Zwischenpunkt gewählt wird. Diese Transformation G ergibt sich also aus der in Gleichungen (30), (31), (32) beschriebenen Transformation F als

$$G_{W_1 \mapsto W_2}(xyz) = F_{W_{D50O02} \mapsto W_2}(F_{W_1 \mapsto W_{D50O02}}(xyz)) \tag{35}$$

In der Regel sollten alle zentrierten Farbraumkoordinaten $\tilde{x}$, $\tilde{y}$ und $\tilde{z}$ zwischen 0 und 1 liegen. So ist auch die Gleichung (32) nur auf diesem Intervall gültig. Allerdings können unter Umständen negative Werte oder Werte oberhalb von 1 auftreten. Dies kann zum Beispiel geschehen, wenn selbstleuchtende Farben betrachtet werden. Ein weiterer Grund für irreguläre zentrierte Farbraumkoordinaten kann zum Beispiel eine lineare Näherung für eine Bradford-Transformation hin zu den Farbraumkoordinaten sein, wenn extrem bunte Farben transformiert werden. Um die Transformation für diese Werte fortzusetzen, sollen Farben mit wenigstens einer nicht-positiven Farbraumkoordinate absolut colorimetrisch behandelt werden, und Farben mit einem Produkt der Farbraumkoordinaten über 1 sollen relativ colorimetrisch behandelt werden.

Die Transformationsgleichung (30) lässt sich somit abwandeln zu

$$\tilde{x}_2 \quad = \begin{cases} \tilde{x}_1 \cdot \frac{x_{\text{white},1}}{x_{\text{white},2}} & : \quad \tilde{x} \le 0 \lor \tilde{y} \le 0 \lor \tilde{z} \le 0 \quad \text{absolut} \\ \tilde{x}_1 & : \quad \tilde{x} \cdot \tilde{y} \cdot \tilde{z} \ge 1 \quad \text{relativ} \\ \tilde{x}_1 \cdot \tilde{f}_q^{\beta_x} & : \quad \text{sonst.} \quad \text{mixed} \end{cases} \tag{36}$$

$\tilde{y}, \tilde{z}$ : analog.

Das vorgestellte Verfahren beruht darauf, mit Hilfe von Gleichung (32) einen Faktor $\tilde{f}_q$ für die Skalierung des geometrischen Mittel $q$ der Farbraumkoordinaten zu bestimmen und diesen anhand der Exponenten $\beta_x$, $\beta_x$, $\beta_z$ auf die Farbraumkoordinaten aufzuteilen. Dieses Verfahren schlägt zunächst genau dann fehl, wenn echt verschiedene Weiß-punkte $W_1$ und $W_2$ das gleiche geometrischen Mittel haben, das heißt

$$x_{\text{white},1} \cdot y_{\text{white},1} \cdot z_{\text{white},1} = x_{\text{white},2} \cdot y_{\text{white},2} \cdot z_{\text{white},2} \tag{37}$$

und

$$(x_{\text{white},1} \ne x_{\text{white},2} \lor y_{\text{white},1} \ne y_{\text{white},2} \lor z_{\text{white},1} \ne z_{\text{white},2}) \tag{38}$$

Dies kann genau dann auftreten, wenn von den Verhältnissen

$$\frac{x_{\text{white},2}}{x_{\text{white},1}}, \qquad \frac{y_{\text{white},2}}{y_{\text{white},1}}, \qquad \frac{z_{\text{white},2}}{z_{\text{white},1}}$$

sowohl Werte größer 1 als auch solche kleiner 1 auftreten. Daher definiert man die logarithmischen Vorzeichen als

$$\Sigma_x \quad = \Sigma \left( \frac{x_{\text{white},2}}{x_{\text{white},1}} \right), \quad \Sigma_y \quad = \Sigma \left( \frac{y_{\text{white},2}}{y_{\text{white},1}} \right) \quad \Sigma_z \quad = \Sigma \left( \frac{z_{\text{white},2}}{z_{\text{white},1}} \right) \tag{39}$$

$$\text{mit } \Sigma(r) \quad = \begin{cases} -1 & : \quad r < 1 \\ 0 & : \quad r = 1 \\ 1 & : \quad r > 1 \end{cases} \tag{40}$$

sowie das dominierende logarithmische Vorzeichen als

$$\bar{\Sigma} = \begin{cases} -1 & : \quad \Sigma_x + \Sigma_y + \Sigma_z < 1 \\ 1 & : \quad \text{sonst.} \end{cases} \tag{41}$$

Damit kann nun das Verhältnis der geometrischen Mittel der Weißpunkte in den Gleichungen (31) und (32) ersetzt werden,

$$\frac{q_{\text{white},1}}{q_{\text{white},2}} \mapsto \sqrt[3]{\left( \frac{x_{\text{white},1}}{x_{\text{white},2}} \right)^{\sigma_x} \cdot \left( \frac{y_{\text{white},1}}{y_{\text{white},2}} \right)^{\sigma_y} \cdot \left( \frac{z_{\text{white},1}}{z_{\text{white},2}} \right)^{\sigma_z}} \tag{42}$$

wobei die Gewichte $\sigma$ = -1, 1, die angeben, welche Verhältnisse inverse und welche direkt eingehen, noch zu bestimmen sind.

Für die direkte Transformation von Weißpunkt $W_1$ nach $W_2$ soll diejenige Komponente invers eingehen, deren logarithmisches Vorzeichen vom dominierenden Vorzeichen abweicht.

Das bedeutet,

$$\sigma_x = \begin{cases} -1 & : & \Sigma_x \neq \overline{\Sigma} \\ 1 & : & \text{sonst.} \end{cases} \tag{43}$$

und $\sigma_y$, $\sigma_z$ analog

Somit kann das Verhältnis in Gleichung (42) nur noch genau dann 1 werden, wenn die beiden Weißpunkte $W_1$ und $W_2$ identisch sind. In diesem Fall ist die gesamte Transformation eine Identität und kann weggelassen werden.

Für die Transformation mit dem Zwischenschritt über D50O02 kann in der Regel davon ausgegangen werden, dass die Farbraumkoordinaten der Weißpunkte unterhalb derer von D50O02 liegen. Daher werden bei der Transformation nach D50O02 diejenigen Verhältnisse invertiert, die ein positives logarithmisches Vorzeichen $\Sigma$ haben und bei der Transformation von D50O02 solche mit negativem logarithmischen Vorzeichen $\Sigma$:

$$\frac{q_{\text{white,1}}}{q_{\text{D50O02}}} \mapsto \sqrt[3]{\left(\frac{x_{\text{white,1}}}{x_{\text{D50O02}}}\right)^{-\Sigma_{1,x}} \cdot \left(\frac{y_{\text{white,1}}}{y_{\text{D50O02}}}\right)^{-\Sigma_{1,y}} \cdot \left(\frac{z_{\text{white,1}}}{z_{\text{D50O02}}}\right)^{-\Sigma_{1,z}}} \tag{44}$$

mit

$$\Sigma_{1,x} = \Sigma\left(\frac{x_{\text{white,1}}}{x_{\text{D50O02}}}\right) \qquad \Sigma_{1,y} = \Sigma\left(\frac{y_{\text{white,1}}}{y_{\text{D50O02}}}\right) \qquad \Sigma_{1,z} = \Sigma\left(\frac{z_{\text{white,1}}}{z_{\text{D50O02}}}\right) \tag{45}$$

$$\frac{q_{\text{D50O02}}}{q_{\text{white,2}}} \mapsto \sqrt[3]{\left(\frac{x_{\text{D50O02}}}{x_{white,2}}\right)^{-\Sigma_{2,x}} \cdot \left(\frac{y_{\text{D50O02}}}{y_{white,2}}\right)^{-\Sigma_{2,y}} \cdot \left(\frac{z_{\text{D50O02}}}{z_{white,2}}\right)^{-\Sigma_{2,z}}} \tag{46}$$

mit

$$\Sigma_{2,x} = \Sigma\left(\frac{x_{\text{D50O02}}}{x_{\text{white,2}}}\right) \qquad \Sigma_{2,y} = \Sigma\left(\frac{y_{\text{D50O02}}}{y_{\text{white,2}}}\right) \qquad \Sigma_{2,z} = \Sigma\left(\frac{z_{\text{D50O02}}}{z_{\text{white,2}}}\right) \tag{47}$$

Auch diese Verhältnisse können nun nur noch dann 1 werden, wenn der jeweilige Weißpunkt $W_1$ [$W_2$] genau dem Weißpunkt der Beleuchtungsbedingung entspricht. In diesem Fall ist die Transformation von $W_1$ nach D50O02 [beziehungsweise von D50O02 nach $W_2$] die identische Abbildung und kann weggelassen werden.

Figur 1 zeigt schematisch das Prinzip einer Farbtransformation für eine Druckprozessanpassung nach dem Stand der Technik. Eine erste Farbtransformation 1 von den Farbwerten [C1, M1, Y1, K1] des ersten Druckprozesses in XYZ-Farbwerte und eine zweite Farbtransformation 2 von den XYZ-Farbwerten in die Farbwerte [C2, M2, Y2, K2] des zweiten Druckprozesses werden nacheinander ausgeführt. Die beiden Farbtransformationen 1 und 2 können auch zu einer äquivalenten Farbtransformation 3 kombiniert werden, die direkt die Farbwerte [C1, M1, Y1, K1] und die Farbwerte [C2, M2, Y2, K2] einander zuordnet. Da über den geräteunabhängigen XYZ-Zwischenfarbraum jeweils die Farbwerte [C1, M1, Y1, K1] und [C2, M2, Y2, K2] einander zugeordnet werden, welche die gleichen XYZ-Farbwerte ergeben, werden die zugeordneten Druckfarben in den beiden Druckprozessen innerhalb des Druckfarbumfangs weitgehend als visuell gleich empfunden.

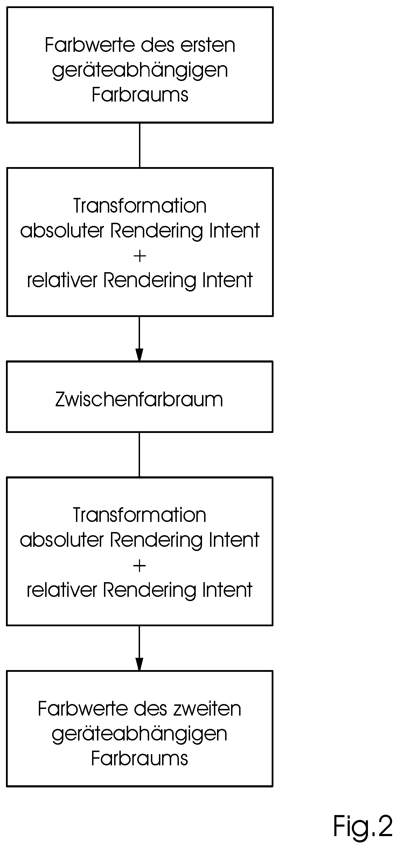

Figur 2 zeigt schematisch das erfindungsgemäße Verfahren. Die Farbwerte eines ersten geräteabhängigen Farbraums werden in einen Zwischenfarbraum transformiert. Die Transformation in den Zwischenfarbraum erfolgt mittels Kombination aus absolutem und relativem Rendering Intent. Die in den Zwischenfarbraum transformierten Farbwerte werden in die Farbwerte des zweiten geräteabhängigen Farbraums transformiert. Die Transformation aus dem Zwischenfarbraum erfolgt mittels Kombination aus absolutem und relativem Rendering Intent.

**Bezugszeichenliste**

1 erste Farbtransformation
2 zweite Farbtransformation
3 dritte Farbtransformation

**Patentansprüche**

1. Verfahren zur Transformation von Farbwerten eines ersten geräteabhängigen Farbraums in die Farbwerte eines zweiten geräteabhängigen Farbraums, so dass der visuelle Eindruck der in beiden Farbräumen wiedergegebenen Farben im Wesentlichen gleich ist und wobei man bei der Transformation der Farbwerte des ersten geräteabhängigen Farbraums in die Farbwerte des zweiten geräteabhängigen Farbraums wenigstens einen Rendering Intent, der zur Beschreibung von Farbwerten dient, verwendet,

wobei man bei der Transformation der Farbwerte des ersten geräteabhängigen Farbraums in die Farbwerte des zweiten geräteabhängigen Farbraums wenigstens einen absoluten Rendering Intent, der absolute Farbwerte beschreibt, mit wenigstens einem relativen Rendering Intent, der relative Farbwerte beschreibt, kombiniert, wobei man die Transformation der Farbwerte des ersten geräteabhängigen Farbraums in die Farbwerte des zweiten geräteabhängigen Farbraums über die Farbwerte eines Zwischenfarbraums durchführt, wobei man die Farbwerte des ersten geräteabhängigen Farbraums in die Farbwerte des Zwischenfarbraums transformiert und die Farbwerte des Zwischenfarbraums in die Farbwerte des zweiten geräteabhängigen Farbraums transformiert,
**dadurch gekennzeichnet,**
**dass** man bei der Transformation der Farbwerte des ersten geräteabhängigen Farbraums in die Farbwerte des Zwischenfarbraums wenigstens einen absoluten Rendering Intent mit wenigstens einem relativen Rendering Intent kombiniert und dass man bei der Transformation der Farbwerte des Zwischenfarbraums in die Farbwerte des zweiten geräteabhängigen Farbraums wenigstens einen absoluten Rendering Intent mit wenigstens einem relativen Rendering Intent kombiniert.

2. Verfahren nach Anspruch 1, wobei es sich bei dem wenigstens einen absoluten Rendering Intent und dem wenigstens einen relativen Rendering Intent jeweils um colorimetrische Rendering Intents handelt.

3. Verfahren nach einem der vorhergehenden Ansprüche, wobei der Zwischenfarbraum ein geräteunabhängiger Farbraum ist.

4. Verfahren nach einem der vorhergehenden Ansprüche, wobei die Farbwerte des Zwischenfarbraums dem D50 2° Normalbeobachter entsprechen.

5. Verfahren nach einem der vorhergehenden Ansprüche, wobei man die Farbwerte des ersten geräteabhängigen Farbraums über wenigstens ein Profil, das wenigstens eine Umrechnungstabelle umfasst, in die Farbwerte des Zwischenfarbraums transformiert und die Farbwerte des Zwischenfarbraums über wenigstens ein Profil, das wenigstens eine Umrechnungstabelle umfasst, in die Farbwerte des zweiten geräteabhängigen Farbraums transformiert, wobei der wenigstens eine absolute Rendering Intent und der wenigstens eine relative Rendering Intent die gleiche Umrechnungstabelle verwenden.

6. Verfahren nach Anspruch 5, wobei es sich bei dem wenigstens einen Profil um wenigstens ein ICC-Profil handelt.

7. Verfahren nach einem der vorhergehenden Ansprüche, wobei das Gerät, auf das sich der erste geräteabhängige Farbraum bezieht, ein anderes Gerät ist als das Gerät, auf das sich der zweite geräteabhängige Farbraum bezieht.

8. Verfahren nach einem der vorhergehenden Ansprüche, wobei man die Transformation der Farbwerte des ersten geräteabhängigen Farbraums in die Farbwerte des zweiten geräteabhängigen Farbraums während eines Druckverfahrens durchführt, in dem man ein digitales Druckbild mittels einer Druckmaschine auf einen Bedruckstoff druckt und wobei der erste geräteabhängige Farbraum der Farbraum eines Bildschirms und der zweite geräteabhängige Farbraum der Farbraum der Druckmaschine ist.

9. Verfahren nach Anspruch 8, wobei das Druckverfahren ausgewählt ist unter Hochdruckverfahren, Flachdruckverfahren und Tiefdruckverfahren, insbesondere Offsetdruck, Inkjetdruck, Flexodruck, Siebdruck und Tiefdruck.

10. Verfahren nach einem der Ansprüche 8 und 9, wobei man bei der Transformation der Farbwerte des ersten geräteabhängigen Farbraums in die Farbwerte des zweiten geräteabhängigen Farbraums keine Simulation von Farbwerten des unbedruckten Bedruckstoffs vornimmt.

11. Verfahren nach Anspruch 10, wobei es sich bei den Farbwerten des unbedruckten Bedruckstoffs um Papierweiß handelt.

12. Verfahren nach einem der vorhergehenden Ansprüche, wobei durch die Transformation der Farbwerte des ersten geräteabhängigen Farbraums in die Farbwerte des zweiten geräteabhängigen Farbraums der hellste Punkt des ersten geräteabhängigen Farbraums auf den hellsten Punkt des zweiten geräteabhängigen Farbraums auf eine Ausgabe ohne Druckpunkte transformiert.

13. Verfahren nach einem der vorhergehenden Ansprüche, wobei der wenigstens eine relative Rendering Intent eine Schwarzpunktkompensation umfasst.

14. Druckmaschine, mit der man ein Verfahren nach einem der Ansprüche 1 bis 13 durchführt.

15. Verwendung des Verfahrens nach einem der Ansprüche 1 bis 13 in einer Druckmaschine.

**Claims**

1. Method for transforming colour values of a first device-dependent colour space into the colour values of a second device-dependent colour space, so that the visual impression of the colours reproduced in both colour spaces is essentially the same, and wherein at least one rendering intent, which serves to describe colour values, is used in the transformation of the colour values of the first device-dependent colour space into the colour values of the second device-dependent colour space,

   wherein at least one absolute rendering intent, which describes absolute colour values, is combined with at least one relative rendering intent, which describes relative colour values, during the transformation of the colour values of the first device-dependent colour space into the colour values of the second device-dependent colour space, wherein the transformation of the colour values of the first device-dependent colour space into the colour values of the second device-dependent colour space is carried out via the colour values of an intermediate colour space, wherein the colour values of the first device-dependent colour space are transformed into the colour values of the intermediate colour space and the colour values of the intermediate colour space are transformed into the colour values of the second device-dependent colour space,
   **characterised in that**
   at least one absolute rendering intent is combined with at least one relative rendering intent during the transformation of the colour values of the first device-dependent colour space into the colour values of the intermediate colour space, and **in that** at least one absolute rendering intent is combined with at least one relative rendering intent during the transformation of the colour values of the intermediate colour space into the colour values of the second device-dependent colour space.

2. Method according to claim 1, wherein the at least one absolute rendering intent and the at least one relative rendering intent are each colourimetric rendering intents.

3. Method according to one of the preceding claims, wherein the intermediate colour space is a device-independent colour space.

4. Method according to any one of the preceding claims, wherein the colour values of the intermediate colour space correspond to the D50 2° normal observer.

5. Method according to one of the preceding claims, wherein the colour values of the first device-dependent colour space are transformed into the colour values of the intermediate colour space via at least one profile comprising at least one conversion table, and the colour values of the intermediate colour space are transformed into the colour values of the second device-dependent colour space via at least one profile comprising at least one conversion table, wherein the at least one absolute rendering intent and the at least one relative rendering intent use the same conversion table.

6. Method according to claim 5, wherein the at least one profile is at least one ICC profile.

7. Method according to any one of the preceding claims, wherein the device to which the first device-dependent colour space refers is a different device than the device to which the second device-dependent colour space refers.

8. Method according to one of the preceding claims, wherein the transformation of the colour values of the first device-dependent colour space into the colour values of the second device-dependent colour space is carried out during a printing process in which a digital print image is printed on a substrate by means of a printing press and wherein the first device-dependent colour space is the colour space of a screen and the second device-dependent colour space is the colour space of the printing press.

9. Method according to claim 8, wherein the printing method is selected from letterpress printing, planographic printing and gravure printing, in particular offset printing, inkjet printing, flexographic printing, screen printing and gravure printing.

10. Method according to one of claims 8 and 9, wherein no simulation of colour values of the unprinted substrate is carried out during the transformation of the colour values of the first device-dependent colour space into the colour values of the second device-dependent colour space.

11. Method according to claim 10, wherein the colour values of the unprinted substrate are paper white.

12. Method according to one of the preceding claims, wherein the transformation of the colour values of the first device-dependent colour space into the colour values of the second device-dependent colour space transforms the brightest point of the first device-dependent colour space to the brightest point of the second device-dependent colour space to an output without printing dots.

13. Method according to any one of the preceding claims, wherein the at least one relative rendering intent comprises black dot compensation.

14. A printing press with which a method according to any one of claims 1 to 13 is carried out.

15. Use of the method according to any one of claims 1 to 13 in a printing press.


**Revendications**

1. Procédé de transformation de valeurs d'encrage d'un premier espace chromatique dépendant du dispositif, en valeurs d'encrage d'un deuxième espace chromatique dépendant du dispositif, de sorte que l'impression visuelle des couleurs restituées dans les deux espaces chromatiques est sensiblement identique, et dans lequel on utilise, lors de la transformation des valeurs d'encrage du premier espace chromatique dépendant du dispositif en valeurs d'encrage du deuxième espace chromatique dépendant du dispositif, au moins une intention de rendu qui sert à décrire des valeurs d'encrage,
sachant que lors de la transformation des valeurs d'encrage du premier espace chromatique dépendant du dispositif en valeurs d'encrage du deuxième espace chromatique dépendant du dispositif, on combine au moins une intention de rendu absolue, qui décrit des valeurs d'encrage absolues, avec au moins une intention de rendu relative, qui décrit des valeurs d'encrage relatives, sachant que l'on effectue la transformation des valeurs d'encrage du premier espace chromatique dépendant du dispositif en valeurs d'encrage du deuxième espace chromatique dépendant du dispositif par l'intermédiaire des valeurs d'encrage d'un espace chromatique intermédiaire, sachant que l'on transforme les valeurs d'encrage du premier espace chromatique dépendant du dispositif en valeurs d'encrage de l'espace chromatique intermédiaire, et les valeurs d'encrage de l'espace chromatique intermédiaire en valeurs d'encrage du deuxième espace chromatique dépendant du dispositif, **caractérisé en ce que**, lors de la transformation des valeurs d'encrage du premier espace chromatique dépendant du dispositif en valeurs d'encrage de l'espace chromatique intermédiaire, on combine au moins une intention de rendu absolue avec au moins une intention de rendu relative et **en ce que**, lors de la transformation des valeurs d'encrage de l'espace chromatique intermédiaire en valeurs d'encrage du deuxième espace chromatique dépendant du dispositif, on combine au moins une intention de rendu absolue avec au moins une intention de rendu relative.

2. Procédé selon la revendication 1, dans lequel au moins ladite intention de rendu absolue et au moins ladite intention de rendu relative sont chacune des intentions de rendu colorimétriques.

3. Procédé selon l'une des revendications précédentes, dans lequel l'espace chromatique intermédiaire est un espace chromatique indépendant du dispositif.

4. Procédé selon l'une des revendications précédentes, dans lequel les valeurs d'encrage de l'espace chromatique intermédiaire correspondent à l'observateur normal D50 2°.

5. Procédé selon l'une des revendications précédentes, dans lequel on transforme les valeurs d'encrage du premier espace chromatique dépendant du dispositif en valeurs d'encrage de l'espace intermédiaire par le biais d'au moins un profil comprenant au moins une table de conversion, et dans lequel on transforme les valeurs d'encrage de l'espace chromatique intermédiaire en valeurs d'encrage du deuxième espace chromatique dépendant du dispositif par le biais d'au moins un profil comprenant au moins une table de conversion, sachant qu'au moins ladite intention de rendu absolu et au moins ladite intention de rendu relative utilisent la même table de conversion.

6. Procédé selon la revendication 5, sachant qu'au moins ledit profil est au moins un profil ICC.

7. Procédé selon l'une des revendications précédentes, dans lequel le dispositif auquel se rapporte le premier espace chromatique dépendant du dispositif est un dispositif différent du dispositif auquel se rapporte le deuxième espace chromatique dépendant du dispositif.

8. Procédé selon l'une des revendications précédentes, dans lequel on effectue la transformation des valeurs d'encrage du premier espace chromatique dépendant du dispositif en valeurs d'encrage du deuxième espace chromatique dépendant du dispositif pendant un procédé d'impression, dans lequel on imprime une image d'impression numérique sur un support d'impression au moyen d'une machine à imprimer et dans lequel le premier espace chromatique dépendant du dispositif est l'espace chromatique d'un écran et le deuxième espace chromatique dépendant du dispositif est l'espace chromatique de la machine à imprimer.

9. Procédé selon la revendication 8, dans lequel le procédé d'impression est choisi parmi les procédés d'impression en relief, les procédés d'impression à plat et les procédés d'impression en creux, en particulier l'impression offset, l'impression à jet d'encre, la flexographie, la sérigraphie et l'impression en creux.

10. Procédé selon l'une des revendications 8 et 9 dans lequel - lors de la transformation des valeurs d'encrage du premier espace chromatique dépendant du dispositif en valeurs d'encrage du deuxième espace chromatique dépendant du dispositif - on ne procède à aucune simulation des valeurs d'encrage du support d'impression non imprimé.

11. Procédé selon la revendication 10, dans lequel les valeurs d'encrage du support d'impression non imprimé sont du blanc papier.

12. Procédé selon l'une des revendications précédentes, sachant que du fait de la transformation des valeurs d'encrage du premier espace chromatique dépendant du dispositif en valeurs d'encrage du deuxième espace chromatique dépendant du dispositif transforme, le point le plus clair du premier espace chromatique dépendant du dispositif sur le point le plus clair du deuxième espace chromatique dépendant du dispositif transforme en une sortie sans points d'impression.

13. Procédé selon l'une des revendications précédentes, dans lequel au moins ladite intention de rendu relative comprend une compensation de point noir.

14. Machine à imprimer avec laquelle on met en œuvre un procédé selon l'une des revendications 1 à 13.

15. Utilisation du procédé selon l'une des revendications 1 à 13 dans une machine à imprimer.

C1 ──→ ┌─────────────────────────┐ X ──→ ┌─────────────────────────┐ ──→ C2
M1 ──→ │       Transformation     │ Y ──→ │       Transformation     │ ──→ M2
Y1 ──→ │ (C1, M1, Y1, K1) => (X,Y,Z) │ Z ──→ │ (X,Y,Z) => (C2, M2, Y2, K2) │ ──→ Y2
K1 ──→ └─────────────────────────┘       └─────────────────────────┘ ──→ K2

C1 ──→ ┌─────────────────────────────────────┐ ──→ C2
M1 ──→ │              Transformation            │ ──→ M2
Y1 ──→ │ (C1, M1, Y1, K1) => (C2, M2, Y2, K2)   │ ──→ Y2
K1 ──→ └─────────────────────────────────────┘ ──→ K2

Fig.1

```
┌─────────────────────────────┐
│   Farbwerte des ersten      │
│   geräteabhängigen          │
│   Farbraums                 │
└─────────────────────────────┘
              │
┌─────────────────────────────┐
│      Transformation         │
│  absoluter Rendering Intent │
│            +                │
│  relativer Rendering Intent │
└─────────────────────────────┘
              │
              ▼
┌─────────────────────────────┐
│      Zwischenfarbraum       │
└─────────────────────────────┘
              │
              ▼
┌─────────────────────────────┐
│      Transformation         │
│  absoluter Rendering Intent │
│            +                │
│  relativer Rendering Intent │
└─────────────────────────────┘
              │
              ▼
┌─────────────────────────────┐
│   Farbwerte des zweiten     │
│   geräteabhängigen          │
│   Farbraums                 │
└─────────────────────────────┘
```

Fig.2

**IN DER BESCHREIBUNG AUFGEFÜHRTE DOKUMENTE**

**In der Beschreibung aufgeführte Patentdokumente**

- US 7161710 B1
- DE 10322378 A1
- US 2007058181 A1